# EUROPÄISCHE PATENTSCHRIFT

(11) **EP 0 975 815 B1**
(45) Veröffentlichungstag und Bekanntmachung des Hinweises auf die Patenterteilung: **12.09.2001**
(21) Anmeldenummer: 98905321.0
(22) Anmeldetag: 20.01.1998
(51) Int. Cl.: C21D 9/30, C21D 1/10

(54) **VERFAHREN ZUM HÄRTEN VON NOCKENWELLEN UND LINEARINDUKTOR ZUR DURCHFÜHRUNG DES VERFAHRENS**
METHOD FOR HARDENING CAMSHAFTS AND LINEAR INDUCTOR FOR THE IMPLEMENTATION OF SAID METHOD
PROCEDE POUR TREMPER DES ARBRES A CAMES ET INDUCTEUR LINEAIRE POUR METTRE LEDIT PROCEDE EN OEUVRE

(30) Priorität: 06.02.1997 DE 19704438
(43) Veröffentlichungstag der Anmeldung: 02.02.2000
(73) Patentinhaber: ELOTHERM GmbH, D-42855 Remscheid (DE)
(72) Erfinder: GEZARZICK, Waldemar, D-42857 Remscheid (DE); LEISNER, Hans-Jürgen, D-42855 Remscheid (DE); SCHULTE, Peter, D-42119 Wuppertal (DE)
(74) Vertreter: Simons, Johannes, Dipl.-Ing.
(86) Internationale Anmeldenummer: EP9800287
(87) Internationale Veröffentlichungsnummer: WO9835066

(56) Entgegenhaltungen:
- DE-C- 4 021 025
- DE-U- 7 527 498
- US-A- 3 824 367
- US-A- 4 675 488
- F.H. REINKE: "Induktionshärtetechnik für Nockenwellen von Verbrennungsmotoren" ELEKTROWARME INTERNATIONAL. EDITION B., Bd. 33, Nr. 3, Juni 1975, ESSEN DE, Seiten b146-b160, XP002067282 in der Anmeldung erwähnt
- PATENT ABSTRACTS OF JAPAN vol. 014, no. 246 (C-0722), 25.Mai 1990 & JP 02 066123 A (MITSUBISHI MOTORS CORP;OTHERS: 01), 6.März 1990,
- PATENT ABSTRACTS OF JAPAN vol. 014, no. 480 (C-0771), 19.Oktober 1990 & JP 02 197517 A (MITSUBISHI MOTORS CORP), 6.August 1990,

## Beschreibung

Die Erfindung betrifft ein Verfahren zum Härten von Nockenwellen, bei dem die Nocken der Nockenwelle gruppenweise bei umlaufender Nockenwelle gleichzeitig gehärtet werden und bei dem während des induktiv erfolgenden Erwärmens einer Gruppe die an die jeweilige Gruppe angrenzende, nicht zu härtende Zone der Nockenwelle mittels einer Kühleinrichtung gegen eine Erwärmung abgeschirmt werden. Darüber hinaus betrifft die Erfindung einen zur Durchführung des Verfahrens bestimmten Induktor.

Ein grundsätzliches Problem beim Härten von eng benachbart angeordneten Härtezonen einer Nockenwelle besteht darin, daß es beim Erwärmen eines einzelnen Nocken zu einem Anlassen des zuvor gehärteten, in nächster Nachbarschaft angeordneten Nockens kommen kann. Beim einzeln erfolgenden Härten ist es daher erforderlich, die zu dem jeweils bearbeiteten Nocken benachbarten Nocken gegen eine Erwärmung abzuschirmen. Der zu diesem Zweck erforderliche apparative Aufwand ist erheblich. Darüber hinaus führt das einzeln erfolgende Härten der Nocken zu einer beträchtlichen Dauer der für das Härten einer Welle erforderlichen Bearbeitungszeit.

Zur Verkürzung der Bearbeitungszeit und zur Beseitigung des Problems des nachträglichen Anlassens zuvor gehärter, eng benachbarter Nocken ist in dem Sonderdruck aus "elektrowärme international" Heft 3/75 "Induktionshärtetechnik für Nockenwellen von Verbrennungsmotoren" vorgeschlagen worden, die Nocken einer Nockenwelle zu Gruppen zusammenzufassen und die Nocken jeweils einer dieser Gruppen gleichzeitig zu härten. Dabei ist die Größe der Gruppe bzw. die Länge der Gruppe durch den Abstand der Zonen der Nockenwelle festgelegt, die keiner Härtung unterzogen werden sollen. Durch diese Vorgehensweise konnte die für das Härten einer Nockenwelle benötigte Bearbeitungszeit erheblich verkürzt werden. Auch besteht wegen des gleichzeitig erfolgenden Erwärmens der eng benachbarten Nocken das Problem des nachträglichen Anlassens zuvor gehärteter Nocken nicht mehr.

Der für das gleichzeitige Härten der Nocken einer Gruppe erforderliche apparative Aufwand ist auch bei dem voranstehend erläuterten Verfahren erheblich, da für jeden Nocken ein einzelner, in der Regel auf dem jeweiligen Nocken reitender Induktor eingesetzt wird. Zur Verminderung dieses technischen Aufwands ist vorgeschlagen worden, die Nockenwelle mittels eines sich entlang der Nockenwelle erstreckenden, im Bereich der Hüllkurve der Nockenwelle angeordneten Linearinduktors zu härten (DE-GM 75 27 498). Es hat sich jedoch herausgestellt, daß es beim Einsatz eines solchen feststehenden Induktors aufgrund der sich bei einem Nockenumlauf ändernden Koppelabstände zu einer Überhitzung der Nockenspitzen bzw. zu einer unzureichenden Erwärmung der übrigen Abschnitte des bearbeiteten Nockens kommt.

Ausgehend von dem voranstehend erläuterten Stand der Technik besteht die Aufgabe der Erfindung darin, ein kostengünstig durchführbares Verfahren zum Härten von Nockenwellen und einen zur Durchführung dieses Verfahrens besonders geeigneten Induktor zu schaffen.

Diese Aufgabe wird erfindungsgemäß dadurch gelöst, daß die zu härtenden Gruppen von Nocken gleichzeitig mittels jeweils eines Linearinduktors gehärtet werden, daß die Erwärmung der Nocken zuerst in mindestens einem Zeitintervall bei niedriger Leistung und zuletzt in einem Zeitintervall bei hoher Leistung erfolgt und daß die Intervalle durch jeweils ein Pausenzeitintervall, in dem keine Leistung zugeführt wird, voneinander getrennt sind.

Gemäß der Erfindung wird vorgeschlagen, nicht nur die Nocken einer einzelnen Gruppe von Nocken einer Nockenwelle gleichzeitig zu härten, sondern die Härtung aller Nockengruppen einer Welle gleichzeitig vorzunehmen. Schon auf diese Weise wird die Bearbeitungszeit und damit einhergehend der Kostenaufwand für das Härten vermindert. Darüber hinaus erfolgt erfindungsgemäß die Erwärmung der Nocken über mindestens einen Zeitabschnitt bei relativ niedriger elektrischer Leistung. Die derart zugeführte Wärme liegt unter der durch die Materialeigenschaften der bearbeiteten Nocken bestimmten kritischen Grenze. Während des Pausenintervalls verteilt sich die derart zugeführte Wärme, so daß die in den Nocken vor dem letzten Abschnitt des Erwärmungsprozesses gespeicherte Wärme gleichmäßig verteilt ist. Erst danach wird zum Abschluß der Erwärmung eine so hohe Energiemenge zugeführt, daß durch das anschließend erfolgende Abschrecken die geforderte Oberflächenhärte erreicht wird. Das Risiko einer Beschädigung des Nockens aufgrund von Überhitzung ist dabei wegen des zuvor erfolgten gleichmäßigen Aufheizens der Nocken minimal. Dies gilt selbst für die Nockenspitzen, in deren Bereich aufgrund des geringen Abstands, mit dem sie an den Heizleitern entlang bewegt werden, die höchste Temperatur entsteht. Dies macht es möglich, das Erwärmen mit kostengünstigen Linearinduktoren durchzuführen.

Die Anzahl der Zeitintervalle, in denen zunächst nur eine geringe Leistung zugeführt wird, kann an die baulichen Gegebenheiten der jeweils bearbeiteten Nockenwelle angepaßt werden. Bei der praktischen Erprobung des erfindungsgemäßen Verfahrens haben sich gute Arbeitsergebnisse dann eingestellt, wenn zuerst zwei durch ein Pausenzeitintervall getrennte Zeitintervalle bei niedriger Leistung durchlaufen werden. Durch die mehrfache Unterbrechung des Erwärmungsprozesses wird aufgrund des zwischen jeder Erwärmung stattfindenden Ausgleichs, der während der Leistungszufuhr ggf. entstandenen ungleichförmigen Wärmeverteilung eine schonende, besonders gleichmäßige Erwärmung der Nocken erreicht.

Eine bevorzugte Ausgestaltung des erfindungsgemäßen Verfahrens ist dadurch gekennzeichnet, daß die Dauer der Zeitintervalle und der Pausenzeitintervalle vom ersten bis zum letzten der Intervalle abnimmt. Auch diese Maßnahme wirkt sich vorteilhaft auf die Gleichmäßigkeit der Wärmeverteilung bei den bearbeiteten Nocken aus.

Vorzugsweise sollte die im letzten Zeitintervall zugeführte Leistung mindestens doppelt so groß sein wie die während der Zeitintervalle niedriger Leistung zugeführte. Ebenso ist es sinnvoll, die niedrige Leistung bei einer anderen Frequenz zuzuführen als die hohe. Auf diese Weise läßt sich die Einleitung der Wärme in das Werkstück gezielt steuern. Dabei hat sich in praktischen Versuchen gezeigt, daß vorteilhafter Weise während der Einleitung der niedrigeren Leistung bei niedriger Frequenz, d.h. bei einer großen Eindringtiefe, und während des Schlußintervalls bei der Einleitung der hohen Leistung bei hoher Frequenz gearbeitet wird, so daß dabei die Erwärmung nur in den an die Oberfläche grenzenden Schichten der Nocken stattfindet.

Hinsichtlich der Durchführbarkeit des erfindungsgemäßen Verfahrens ist es günstig, wenn die Nockenwellen während der Durchführung des Verfahrens im wesentlichen horizontal ausgerichtet sind. Auf diese Weise ist beispielsweise das Kühlen der nicht zu härtenden Abschnitte der Nockenwelle während des Erwärmens der Gruppen von zu härtenden Nocken vereinfacht.

Je nach Einsatzgebiet und Beschaffenheit der zu bearbeitenden Nockenwelle kann es sinnvoll sein, das auf das Erwärmen der Nockenwelle folgende Abschrecken in einem Zeitintervall durchzuführen, dessen Dauer derart verkürzt ist, daß nach dem Abschrecken eine Restwärme erhalten bleibt. Auf diese Weise kann die in der Nockenwelle nach dem derart durchgeführten Abschrecken noch vorhandene Restwärme zum Anlassen der Nockenwelle genutzt werden, so daß ein häufig unerwünschtes Durchhärten der Wellen sicher vermieden wird.

Besonders geeignet zur Durchführung des erfindungsgemäßen Verfahrens ist ein Linearinduktor mit mindestens zwei sich achsparallel zu der Nockenwelle erstreckenden, im Bereich der Hüllkurve der Gruppe von Nocken angeordneten Heizleiter, die in einem auf die Drehachse der Nockenwelle bezogenen Winkelabstand von maximal 180° entfernt voneinander angeordnet sind, wobei die Länge der Heizleiteräste dem Abstand zwischen den äußersten Enden der jeweiligen Gruppe von Nocken entspricht und daß jeder der Heizleiter als Heizleiterschleife mit zwei sich achsparallel zu der Nockenwelle erstreckenden Heizleiterästen ausgebildet ist, von denen der erste bezogen auf die Drehachse der Nockenwelle um einen Winkel von weniger als 90° gegenüber dem zweiten versetzt angeordnet ist.

Der erfindungsgemäße Linearinduktor umgreift mit seinen Leiterästen höchstens die Hälfte der bei einem Umlauf von den Nocken überstrichenen Zylinderfläche. Auf diese Weise sind insbesondere die Spitzen der einzelnen Nocken jeweils nur über einen Bruchteil ihres bei einer Umdrehung der Welle zurückgelegten Weges einer größeren induktiven Erwärmung ausgesetzt. Während des Abschnitts, in dem keine direkte Begegnung mit einem Leiterast des Induktors stattfindet, kann die zuvor in die Nockenwellenspitze induzierte Wärme in die Bereiche vordringen, in denen der Nocken eine größere Masse aufweist. So wird auf einfache Weise eine zusätzliche Verbesserung der Gleichmäßigkeit der Wärmeverteilung innerhalb der Nocken erreicht.

Nachfolgend wird die Erfindung anhand einer ein Ausführungsbeispiel darstellenden Zeichnung näher erläutert. Es zeigen:
- Fig. 1: eine Nockenwelle mit aufgesetztem Linearinduktor in ausschnittsweiser, schematischer und perspektivischer Darstellung;

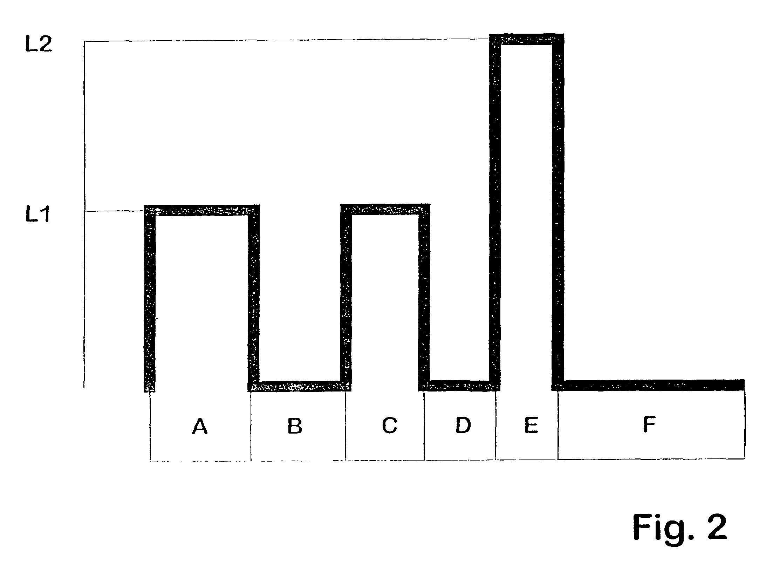

- Fig. 2: eine Abfolge der während des Erwärmens und Abschreckens der Nockenwelle nach Fig. 1 durchlaufenen Zeitintervalle;
- Fig. 3: eine Vorrichtung zum Härten von Nockenwellen in einer schematischen Darstellung.

Der Linearinduktor 1 weist zwei als Heizleiterschleifen ausgebildete Heizleiter 2,3 auf, die jeweils einen ersten Heizleiterast 2a,3a und einen zweiten Heizleiterast 2b,3b umfassen. Die Heizleiteräste 2a,2b,3a,3b erstrecken sich koaxial zur Längsachse L der Nockenwelle 4, wobei die ersten Heizleiteräste 2a,3a einander gegenüberliegend angeordnet sind, während die jeweils zweiten, sich ebenfalls koaxial zu der Nockenwelle erstreckenden Heizleiteräste 2b,3b eng benachbart zueinander und bezogen auf die Längsachse der Nockenwelle 4 um einen Winkelbetrag von weniger als 90° gegenüber den jeweils ersten Heizleiterästen 2a,3a versetzt angeordnet sind. Die Heizleiteräste 2a,2b,3a,3b der Heizleiter 2,3 sind über jeweils einen Verbindungsast 2c,3c miteinander bzw. über eine Zuleitung 2d,3d und eine Rückleitung 2e,3e mit einer nicht weiter dargestellten Versorgungs- und Steuereinrichtung verbunden. Der jeweilige Verbindungsast 2c,3c und der dem jeweiligen Heizleiter 2,3 zugeordnete Abschnitt der Zuleitung 2d bzw. 3d sind entsprechend einem Kreisbogen gekrümmt, wobei der von ihnen umgriffene Winkelbereich weniger als 90° beträgt. Auf diese Weise umgreifen die Heizleiter 2,3 des Induktors 1 die von der Nockenwelle überstrichene Zylinderfläche um maximal 180°.

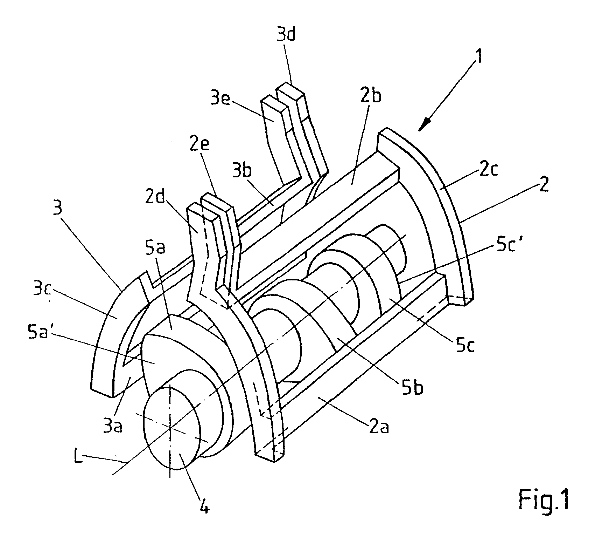

Die in Fig. 1 ausschnittsweise gezeigte Nockenwelle 4 weist unter anderem eine Gruppe 5 von drei Nocken 5a,5b,5c auf. Die an die äußeren Nocken 5a,5c angrenzenden Abschnitte der Nockenwelle 4 sollen keiner Härtung unterzogen werden und sind daher mittels nicht gezeigter, handelsüblicher Kühleinrichtungen gegen einen Wärmeübertritt während Erwärmung der Gruppe 5 von Nocken 5a,5b,5c abgeschottet. Die Länge der Heizleiteräste 2a,2b,3a,3b entspricht dem Abstand zwischen den Stirnseiten 5a=,5c= der jeweils äußeren Nocken 5a,5c der Gruppe 5 von Nocken 5a-5c. Im Bereich der Nocken 5a,5b,5c sind die Heizleiteräste 2a,2b,3a,3b zur Einleitung der elektrischen Leistung mit nicht gezeigten Blechen bestückt.

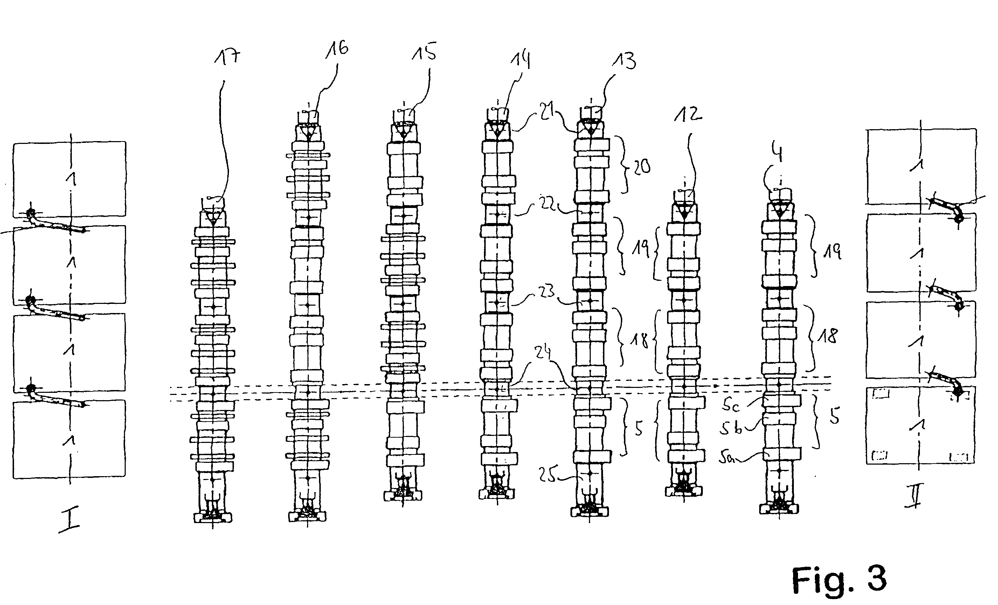

Die in Fig. 3 gezeigte Vorrichtung weist zwei Stationen I,II auf, in der Nockenwellen 4,12-17 gehärtet werden können. Jede der Stationen I,II ist mit vier Induktoren 1 der voranstehend erläuterten Art ausgestattet.

Die Nockenwellen 4,12-17 weisen bis zu vier Gruppen 5,18,19,20 von Nocken auf, die gleichzeitig in den Stationen I,II gehärtet werden können. Jeweils zwischen den Gruppen 5,18,19,20 weisen die Wellen 4, 12-17 Lagerabschnitte 21,22,23,24,25 auf, die ungehärtet bleiben sollen.

Nach dem Einlegen einer der Nockenwellen 4,12-17 werden die Induktoren 1 abgesenkt. Anschließend wird während eines ersten Zeitintervalls A bei einer niedrigen Frequenz eine relativ niedrige elektrische Leistung L1 auf die sich drehende jeweilige Nockenwelle aufgegeben. Solange sich die Spitzen der Nocken 5a,5b,5c dabei im Bereich der Heizleiter 2,3 befinden, erfolgt in ihrem Bereich die stärkste Erwärmung. Im nicht von den Heizleitern 2,3 umgriffenen Bereich erfolgt ein Einwandern der Wärme in die Bereiche der Nocken 5a,5b,5c, in der diese eine größere Masse aufweisen.

Nach Ablauf des ersten Zeitintervalls A wird die Energiezufuhr während eines Pausenzeitintervalls B unterbrochen. Das Pausenzeitintervall B ist kürzer als das erste Zeitintervall A. Anschließend werden die Gruppen 5,18,19,20 über ein gegenüber dem Pausenzeitintervall B nochmals verkürztes Zeitintervall C bei gleicher Leistung L1 und Frequenz wieder beheizt. Nach einem zweiten, gegenüber dem Zeitintervall C nochmals verkürzten Pausenzeitintervall D ohne Energiezufuhr erfolgt im letzten, kürzesten Zeitabschnitt E ein Aufheizen bei verdoppelter Leistung L2 und hoher Frequenz. In diesem Intervall wird im wesentlichen die zu härtende Oberfläche auf die für ein optimales Härteergebnis erforderliche Temperatur gebracht. Nach Abschluß des Aufheizens erfolgt über ein bestimmtes Zeitintervall F das Abschrecken der Nocken 5a,5b,5c der Gruppen 5, 18,19,20.

## Patentansprüche

1. Verfahren zum Härten von Nockenwellen, bei dem die Nocken (5a,5b,5c) der Nockenwelle (4,12-17) gruppenweise bei umlaufender Nockenwelle (4,12-17) gleichzeitig gehärtet werden und bei dem während des induktiv erfolgenden Erwärmens einer Gruppe (5,18,19,20) die an die jeweilige Gruppe (5,18,18,20) angrenzende, nicht zu härtenden Zonen der Nockenwelle (4) mittels einer Kühleinrichtung gegen eine Erwärmung abgeschirmt werden,
**dadurch gekennzeichnet, daß** die zu härtenden Gruppen (5,18,19,20) von Nocken (5a,5b,5c) gleichzeitig mittels jeweils eines Linearinduktors (1) gehärtet werden, daß die Erwärmung der Nocken (5a,5b,5c) zuerst in mindestens einem Zeitintervall (A,C) bei niedriger Leistung (L1) und zuletzt in einem Zeitintervall (E) bei hoher Leistung (L2) erfolgt und daß diese Zeitintervalle (A,C,E) durch jeweils ein Pausenzeitintervall (B,D), in dem keine Leistung zugeführt wird, voneinander getrennt sind.

2. Verfahren nach Anspruch 1,
**dadurch gekennzeichnet, daß** zuerst zwei durch ein Pausenzeitintervall (B) getrennte Zeitintervalle (A,C) bei niedriger Leistung (L1) durchlaufen werden.

3. Verfahren nach einem der voranstehenden Ansprüche,
**dadurch gekennzeichnet, daß** die Dauer der Zeitintervalle (A,C,E) und der Pausenzeitintervalle (B,D) vom ersten bis zum letzten der Intervalle (A-E) abnimmt.

4. Verfahren nach einem der voranstehenden Ansprüche,
**dadurch gekennzeichnet, daß** die im letzten Zeitintervall (E) zugeführte Leistung (L2) mindestens doppelt so groß ist wie die während der Zeitintervalle (A,C) niedriger Leistung (L1) zugeführte.

5. Verfahren nach einem der voranstehenden Ansprüche,
**dadurch gekennzeichnet**, daß die niedrige Leistung (L1) bei einer anderen Frequenz zugeführt wird als die hohe.

6. Verfahren nach einem der voranstehenden Ansprüche,
**dadurch gekennzeichnet, daß** die Nockenwellen (5,12-17) während der Durchführung des Verfahrens im wesentlichen horizontal ausgerichtet sind.

7. Verfahren nach einem der voranstehenden Ansprüche,
**dadurch gekennzeichnet, daß** das auf das Erwärmen der Nockenwelle (4,12-17) folgende Abschrecken in einem Zeitintervall (F) erfolgt, dessen Dauer derart verkürzt ist, daß nach dem Abschrecken eine Restwärme erhalten bleibt.

8. Linearinduktor zur Durchführung des Verfahrens nach einem der voranstehenden Ansprüche mit mindestens zwei sich achsparallel zu der Nockenwelle (4,12-17) erstreckenden, im Bereich der Hüllkurve der Gruppe (5,18,19,20) von Nocken (5a,5b,5c) angeordneten Heizleitern (2,3), die in einem auf die Drehachse (L) der Nockenwelle (4,12-17) bezogenen Winkelabstand von maximal 180° entfernt voneinander angeordnet sind,
**dadurch gekennzeichnet, daß** die Länge der Heizleiteräste (2,3) dem Abstand zwischen den äußersten Enden (5a=,5c=) der jeweiligen Gruppe (5,18,19,20) von Nocken (5a,5b,5c) entspricht und daß jeder der Heizleiter (2,3) als Heizleiterschleife mit zwei sich achsparallel zu der Nockenwelle erstreckenden Heizleiterästen (2a,2b,3a,3b) ausgebildet ist, von denen der erste (2a,3a) bezogen auf die Drehachse (L) der Nockenwelle (4,12-17) um einen Winkel von weniger als 90° gegenüber dem zweiten (2b,3b) versetzt angeordnet ist.

## Claims

1. A method for the hardening of camshafts wherein the cams (5a, 5b, 5c) of the camshaft (4, 12-17) are hardened simultaneously in groups while the camshaft (4, 12-17) is rotating, and wherein during the inductively performed heating of a group (5, 18, 19, 20) that zones of the camshafts (4) which are not to be hardened and bordering on the group (5, 18, 19, 20) concerned is shielded by means of a cooling device from heating, **characterised in that** the groups (5, 18, 19, 20) of cams (5a, 5b, 5c) that are to be hardened are simultaneously hardened by means of one linear inductor (1) each, that the heating of the cams (5a, 5b, 5c) is performed first in at least one time interval (A, C) at low power (L1) and then in a time interval (E) at high power (L2) and that these time intervals (A, C, E) are respectively separated from each other by a pause interval (B, D) during which no power is applied.

2. A method as in claim 1, **characterised in that** two time intervals (A, C) are gone through at low power (L1), separated from each other by a pause interval (B).

3. A method as in one of the foregoing claims, **characterised in that** the duration of the time intervals (A, C, E) and of the pause intervals (B, D) decreases from the first to the last of the intervals (A-E).

4. A method as in one of the foregoing claims, **characterised in that** the power (L2) applied in the last time interval (E) is at least twice as great as the one applied during the time intervals (A, C) of low power (L1).

5. A method as in one of the foregoing claims, **characterised in that** the low power (L1) is applied at a lower frequency than the high one.

6. A method as in one of the foregoing claims, **characterised in that** the camshafts (5, 12-17) are positioned essentially horizontally during the performance of the process.

7. A method as in one of the foregoing claims, **characterised in that** the quenching that follows the heating of the camshaft (4, 12-17) takes place during a time interval (F) whose duration is shortened in such a way that residual heat is retained following quenching.

8. A linear inductor for performing the method as in one of the foregoing claims with at least two heating conductors (2, 3) extending axially parallel with the camshaft (4, 12-17), positioned in the area of the envelope curve of the group (5, 18, 19, 20) of cams (5a, 5b, 5c), and separated from each other by an angular distance of not more than 180° relative to the axis of rotation (L) of the camshaft (4, 12-17), **characterised in that** the length of the heating-conductor arms (2, 3) corresponds to the distance between the extreme ends (5a=, 5c=) of the respective group (5, 18, 19, 20) of cams (5a, 5b, 5c), and that each of the heating conductors (2, 3) is formed as a heating-conductor loop with two heating-conductor arms (2a, 2b, 3a, 3b) extending axially parallel with the camshaft, the first of which (2a, 3a) is in a position displaced by an angle of less than 90° relative to the second one (2b, 3b) with respect to the axis of rotation (L) of the camshaft (4, 12-17).

## Revendications

1. Procédé pour réaliser la trempe d'arbres à cames, selon lequel on applique simultanément la trempe aux cames (5a, 5b, 5c) de l'arbre à cames (4, 12-17) par groupes, pendant la rotation de l'arbre à cames (4, 12-17) et selon lequel pendant le chauffage exécuté de façon inductive d'un groupe (5, 18, 19, 20), les zones de l'arbre à cames (4), qui ne doivent pas être trempées et qui jouxtent le groupe respectif (5, 18, 19, 20), sont protégées vis-à-vis d'un échauffement, à l'aide d'un dispositif de refroidissement,
**caractérisé en ce que** les groupes (5, 18, 19, 20), qui doivent être soumis à la trempe, de cames (5a, 5b, 5c) sont soumis simultanément à une trempe à l'aide d'un inducteur linéaire respectif (1), que l'échauffement des cames (5a, 5b, 5c) s'effectue tout d'abord pendant au moins un intervalle de temps (A, C) avec une faible puissance (L1) et en dernier lieu pendant un intervalle de temps (E) pour une puissance (L2) élevée et que ces intervalles de temps (A, C, E) sont séparés les uns des autres respectivement par un intervalle de temps de pause (B, D), pendant lequel aucune puissance n'est envoyée.

2. Procédé selon la revendication 1, **caractérisé en ce qu'**au moins deux intervalles de temps (A, C) séparés par un intervalle de temps de pause (B), se déroulent avec une faible puissance (L1).

3. Procédé selon l'une des revendications précédentes, **caractérisé en ce que** la durée des intervalles de temps (A, B, E) et des intervalles de temps de pause (B, D) diminue depuis le premier jusqu'au dernier des intervalles (A à E).

4. Procédé selon l'une des revendications précédentes, **caractérisé en ce que** la puissance (L2) envoyée pendant le dernier intervalle de temps (E) est égale au moins au double de la puissance (L1) faible envoyée pendant les intervalles de temps (A, C).

5. Procédé selon l'une des revendications précédentes, **caractérisé en ce que** la faible puissance (L1) est envoyée à une fréquence autre que la fréquence d'envoi de la puissance élevée.

6. Procédé selon l'une des revendications précédentes, **caractérisé en ce que** les arbres à cames (5, 12-17) sont orientés essentiellement horizontalement pendant la mise en oeuvre du procédé.

7. Procédé selon l'une des revendications précédentes, **caractérisé en ce que** le refroidissement brusque, qui succède à l'échauffement de l'arbre à cames (4, 12-17), s'effectue pendant un intervalle de temps (F), dont la durée est réduite de telle sorte qu'une chaleur résiduelle subsiste après le refroidissement brusque.

8. Inducteur linéaire pour la mise en oeuvre du procédé selon l'une des revendications précédentes, comportant au moins deux conducteurs de chauffage (2, 3), qui s'étendent parallèlement à l'axe de l'arbre à cames (4, 12-17), sont disposés au voisinage de la courbe enveloppe du groupe (5, 18, 19, 20) de cames (5a, 5b, 5c) et sont séparés l'un de l'autre par une distance angulaire égale au maximum à 180°, rapportée à l'axe de rotation (L) de l'arbre à cames (4, 12-17),
**caractérisé en ce que** la longueur des branches (2, 3) des conducteurs de chauffage correspond à la distance entre les extrémités les plue extérieures (5a⁼, 5c⁻) du groupe respectif (5, 18, 19, 20) de cames (5a, 5b, 5c) et que chacun des conducteurs de chauffage (2, 3) est agencé sous la forme d'une boucle de conducteur de chauffage comportant deux branches (2a, 2b, 3a, 3b) de conducteur de chauffage, qui s'étendent parallèlement à l'axe de l'arbre à cames et parmi lesquelles la première branche (2a, 3a) est disposée en étant décalée d'un angle de moins de 90° par rapport à la seconde branche (2b, 3b), d'une manière rapportée à l'axe de rotation (L) de l'arbre à cames (4, 12-17).
